(19) 

**Europäisches Patentamt**
**European Patent Office**
**Office européen des brevets**

(11) **EP 4 752 829 A1**

(12) # EUROPEAN PATENT APPLICATION

(43) Date of publication:
**03.06.2026   Bulletin 2026/23**

(21) Application number: **25213380.6**

(22) Date of filing: **04.11.2025**

(51) International Patent Classification (IPC):
**G06T 7/00** $^{(2017.01)}$

(52) Cooperative Patent Classification (CPC):
**G06T 7/0012;** G06T 2207/10072; G06T 2207/30101

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.11.2024   FR 2413258**

(71) Applicant: **GE Precision Healthcare LLC
Waukesha, WI 53188 (US)**

(72) Inventors:
• **GOGIN, Nicolas
  78533 BUC (FR)**

• **PEROT, Etienne
  78533 BUC (FR)**
• **DAMHIEU, Caroline
  78533 BUC (FR)**
• **CASELLES, Luc
  78533 BUC (FR)**
• **BELISSEN, Valentin
  78533 BUC (FR)**

(74) Representative: **Kilburn & Strode LLP
Lacon London
84 Theobalds Road
Holborn
London WC1X 8NL (GB)**

(54) **METHOD FOR CALCULATING LOCAL NARROWINGS IN A DUCT**

(57)    This method for calculating local narrowings from a three-dimensional image of a duct comprises the following steps:
- Determining (step E3) a minimum diameter profile of a duct section along the length of the duct;
- Defining (step E4) at least one sliding window for examining the duct for which the minimum diameter of the duct at the longitudinal ends of said window is known for each position of said window on the duct; and
- Calculating (step E5), for each position of the at least one window, the maximum loss of minimum diameter of the duct within the window with respect to an interpolation of the diameters at the longitudinal ends of the window.

[Fig. 1]

EP 4 752 829 A1

**Description**

TECHNICAL DOMAIN

The present invention relates to the imaging and acquisition of visual information in and around ducts such as blood vessels.

In particular, the present invention relates to the identification of the narrowing of the diameter of a blood vessel.

In general, the invention applies to any mechanical or physiological duct for which a diameter profile examination may be carried out, for example for medical or maintenance purposes.

PRIOR ART

In the field of cardiovascular imaging, the current tools make it possible to visualize blood vessels, measure their diameter, and manually position markers at different reference points on images of these vessels in order to deduce specific characteristics, such as the presence of particular narrowings in the diameter of blood vessels, sometimes symptomatic of stenosis (narrowing of a coronary artery due, for example, to the presence of calcification on the artery). Helping to identify stenosis is important because doing so may ultimately reduce a patient's risk of heart attack.

However, these manual methods are unreliable, time-consuming, non-reproducible and lead to uncertainty about the measurements acquired.

Alternatively, tools developed using neural networks may be used to identify stenoses in blood vessels. Nevertheless, this identification does not comprise any factual, quantifiable data that would make it possible to agree on the severity of the stenoses identified.

DISCLOSURE OF THE INVENTION

The object of the present invention is therefore to overcome the aforementioned drawbacks and to provide a reliable and reproducible method for identifying and quantifying narrowings in ducts such as blood vessels.

The present invention relates to a method for calculating local narrowings from a three-dimensional image of a duct, the method comprising the following steps:

- Determining a minimum diameter profile of a duct section along the length of the duct;

- Defining at least one sliding window for examining the duct for which the minimum diameter of the duct at the longitudinal ends of said window is known for each position of said window on the duct; and

- Calculating, for each position of the at least one window, the maximum loss of minimum diameter of the duct within the window with respect to an interpolation of the diameters at the longitudinal ends of the window.

In this way, the present solution makes it possible to automatically detect and quantify the narrowings of a duct, e.g. vascular stenosis, via a method that is simple for an operator, said operator not having to manually select references. The clinical confidence is also strengthened.

Advantageously, the method also comprises a step of recording the position of a window when the maximum loss of minimum diameter calculated for said window is greater than a predetermined threshold, preferably 50% loss, even more preferably 70% loss.

In a particular embodiment, the method further comprises a step of evaluating, for each window for which the position is recorded and which at least partially overlaps another window for which the position is recorded, the average loss of minimum diameter of the duct within said window with respect to the interpolation of the diameters at the longitudinal ends of the window.

Advantageously, the method comprises a step of classifying, for each set of windows for which the positions are recorded and which at least partially overlap, the window for which the average loss of minimum diameter evaluated is the highest in said set of windows.

Optionally, the method comprises a prior step of acquiring a three-dimensional image of a duct tree and a step of processing the three-dimensional image by segmenting the duct tree into at least one three-dimensional image of a duct.

Advantageously, the minimum diameter profile is determined with a measurement step of between 0.1 mm and 1 mm, preferably between 0.2 mm and 0.5 mm, even more preferably 0.3 mm, the sliding window of examination sliding along the duct with an increment equivalent to the measurement step of the minimum diameter profile.

Advantageously, the longitudinal ends of the window are spaced apart by a distance of between 1.8 mm and 14.1 mm.

Advantageously, a plurality of windows is defined, each window comprising a distance between its longitudinal ends different from the others.

In a particular embodiment, the recording step is carried out only if the maximum loss of minimum diameter of the duct within the window with respect to the minimum diameter of the longitudinal end of the window having the smallest minimum diameter is greater than a predetermined threshold, preferably 40% loss.

Advantageously, the method is implemented only for portions of a duct for which the minimum diameter is greater than a value between 1 mm and 3 mm, preferably between 1.5 mm and 2 mm, even more preferably a value of 1.6 mm.

In a particular embodiment, the duct is a physiological duct such as a blood vessel, preferably a coronary artery.

The present invention also relates to a computer program comprising instructions which, when the program is executed by a computer, cause said computer to implement the steps of the method as previously defined.

The present invention also relates to a system comprising means for implementing the steps of the method as defined above.

The system comprises, for example, a computer and a computer-readable data medium, the computer program as defined above being stored on the data medium.

BRIEF DESCRIPTION OF THE DRAWINGS

Further objects, features and advantages of the invention will become apparent from the following description, given solely by way of non-limiting example, and made with reference to the appended drawings in which:

[Fig 1]
is a schematic view of the various steps implemented in the method according to the invention;

[Fig 2]
is a three-dimensional duct tree; and

[Fig 3]
is a schematic two-dimensional view of a duct comprising a narrowing.

DETAILED DESCRIPTION OF AT LEAST ONE EMBODIMENT

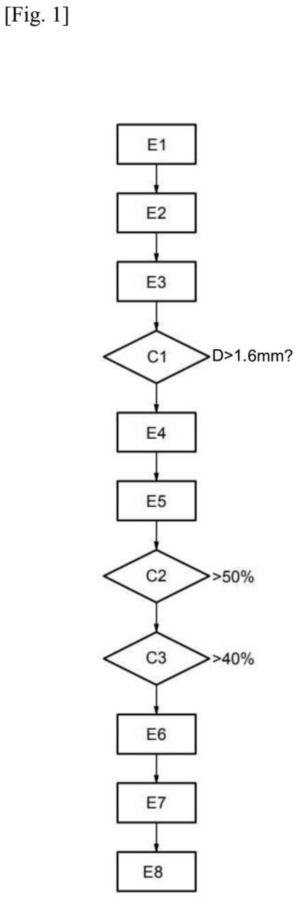

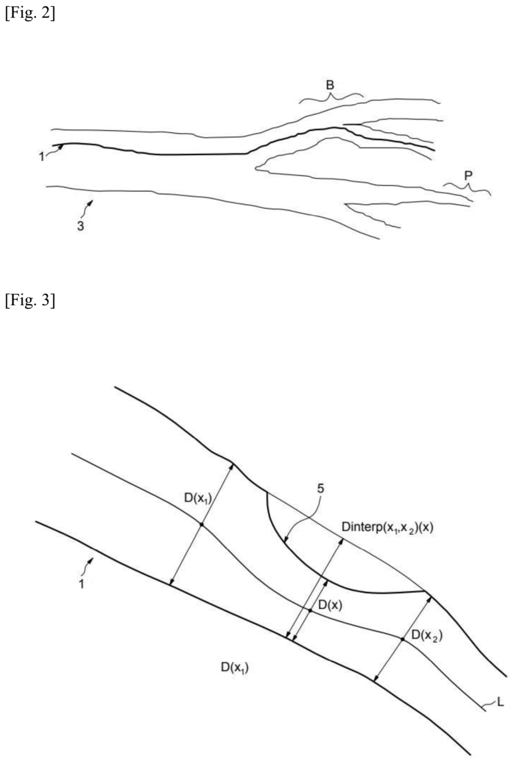

Fig. 1 shows schematically the various steps in a method for calculating local narrowings from a three-dimensional image of a duct 1 shown in Fig. 2 and 3.

For example, the duct 1 is a physiological duct 1 of the human body, such as a blood vessel. The duct 1 is, for example, a coronary artery and may consist of a branch of the aorta at the tip P of said coronary artery, without including the bifurcations B.

This method may first be initiated by a step E1 to acquire a three-dimensional image of a duct 1 tree 3.

This tree 3 is shown schematically in Fig. 2. In the same Fig. 2, reference 1 shows the path of that which is referred to in the present application as a duct in the tree 3. Clearly, a tree 3 comprises a plurality of ducts 1, the base of which, on the left of Fig. 2, is common.

A step E2 may then be carried out to process the three-dimensional image by segmenting the duct 1 tree 3 into at least one three-dimensional image of a duct 1.

A schematic close-up view of a duct 1 portion comprising a narrowing 5 is shown in Fig. 3.

To implement the method, a step E3 is carried out to determine a minimum diameter profile D of a section of the duct 1 along the length of the duct 1. The duct 1 may be pre-selected by an operator from the duct 1 tree 3. As the duct 1 is three-dimensional, it is in fact necessary to determine the smallest diameter of each section of the duct 1, for example by image processing. The image processing carried out comprises, for example, tracing a center line L at the center of the duct 1 and tracing a radius extending virtually from this center line L to the walls of the duct 1, in practice the lumen if the duct 1 is a coronary artery.

The position of the diameter along the length of the duct 1 is denoted by x, i.e. the position of a section perpendicular to the longitudinal axis of the duct 1, defined by the center line L.

The minimum diameter profile D is optionally determined with a measurement step of between 0.1 mm and 1 mm, preferably between 0.2 mm and 0.5 mm, even more preferably 0.3 mm. Thus, in the latter case, the minimum diameter of the duct 1 is known every 0.3 mm along the longitudinal axis of the duct.

For the rest of the method, a condition C1 is optionally applied such that the following steps are only implemented for portions of a duct 1 for which the minimum diameter D is greater than a value between 1 mm and 3 mm, preferably between 1.5 mm and 2 mm, even more preferably a value of 1.6 mm. In fact, if the duct 1 is a blood vessel, said blood vessel does not have a constant minimum diameter D and the tip P of a duct 1 is so fine, for example less than one millimeter in minimum diameter, that the implementation of the present method for this type of minimum diameter D would not be relevant.

Subsequently, a step E4 is carried out to define at least one sliding window for examining the duct 1 for which the minimum diameter D of the duct 1 at the longitudinal ends of said window is known for each position of said window on the duct 1.

In practice, $x_1$ and $x_2$ are the positions of the longitudinal ends of each window, $x_2$ generally corresponding to a position for which the minimum diameter D is smaller than the position $x_1$, generally located closer to the tip P.

For example, the longitudinal ends of the window are spaced apart by a distance of between 1.8 mm and 14.1 mm, known as the width of the window, to allow appropriate examination of foreign bodies on the similarly dimensioned duct 1.

Each examination window is designed to slide along the duct 1 in order to examine local narrowings 5 of minimum diameter D of the duct 1, sometimes symptomatic of the presence of stenosis.

For example, the window slides along the duct 1 with an incremental displacement equivalent to the step of measuring the minimum diameter profile D.

Optionally, a plurality of windows is defined, each window comprising a distance between its longitudinal ends different from the others. In a particular embodiment, a high number of windows is defined to cover a wide range of window widths, for example from 1.8 mm to 14.1 mm.

For example, windows are defined so as to have a window for each possible width between 1.8 mm and 14.1 mm, with an increment of 0.3 mm between each different width.

A step E5 is then carried out of calculating, for each position of the at least one window, the maximum loss of minimum diameter D of the duct 1 within the window with respect to an interpolation of the diameters at the longitudinal ends of the window.

Thus, for each x between $x_1$ and $x_2$, a minimum diameter loss D of the duct 1 within the window with respect to an interpolation of the diameters at the longitudinal ends of the window is calculated. The maximum of these losses is then calculated, according to the global formula:

$$\max_{x \in [x_1, x_2]} \left( 1 - \frac{D(x)}{D_{interp}(x_1, x_2)(x)} \right)$$

With $D_{interp}(x_1,x_2)(x) = w(x)D(x_1) + (1 - w(x))D(x_2)$ the interpolation of the minimum diameters D at the longitudinal ends of the window at the position x, and w(x) a linear function with a value of 1 at $x_1$ and 0 at $x_2$.

This calculation thus provides particularly relevant data on the presence of narrowings 5 in the duct 1, the higher the maximum loss, the more the duct 1 is narrowed in the direction of its section, for example symptomatic of severe stenosis in the case where the duct 1 is a coronary artery.

For example, a step E6 may be carried out to record the position of a window when the maximum loss of minimum diameter calculated for said window is greater than a predetermined threshold, preferably 50% loss, even more preferably 70% loss, according to a C2 condition. These percentages correspond to a narrowing 5 that could potentially indicate the presence of a severe stenosis, or in any case a narrowing 5 of which the cause needs to be investigated.

The recording step E6 comprises, for example, writing to memory the position of the window, its width and the maximum loss of minimum diameter D calculated for said window.

Optionally, the recording step E6 is additionally carried out only if the maximum loss of minimum diameter D of the duct 1 within the window with respect to the minimum diameter D of the longitudinal end of the window having the smallest minimum diameter D is greater than a predetermined threshold, preferably 40% loss, according to a condition C3. This double condition C2 and C3 avoids confusing an undesired narrowing 5 with the presence of a bifurcation B from the duct 1.

Then, for each window for which the position is recorded in the preceding step E6 and which overlaps at least partially with another window of which the position is recorded, it is possible to carry out a step E7 to evaluate the average loss of minimum diameter D of the duct 1 within said window with respect to the interpolation of the minimum diameters D at the longitudinal ends of the window. The average of these losses is evaluated according to the global formula:

$$\underset{x \in [x_1, x_2]}{average} \left( 1 - \frac{D(x)}{D_{interp}(x_1, x_2)(x)} \right)$$

Finally, a step E8 may be carried out to classify, for each set of windows for which the positions are recorded and which at least partially overlap, the window for which the average minimum diameter loss D evaluated is the highest in said set of windows.

These last two steps E7 and E8 allow for the same narrowing 5 not to be taken into account several times with different windows and for filtering to be carried out in order to evaluate the window that constitutes the best reference for identifying a narrowing 5, for example a stenosis. The best examination reference here is an equivalent to the manual references of the state of the art, but is now obtained automatically and in a reproducible, optimized and reliable way.

This window is thus classified, for example stored in memory, with the window's position, width and maximum and average loss of minimum diameter D calculated and respectively evaluated.

The invention also relates to a system comprising means for implementing the steps of the method shown, the means comprising, for example, a computer.

**Claims**

1. A method for calculating local narrowings from a three-dimensional image of a duct (1), **characterized in that** it comprises the following steps:

   - Determining (step E3) a minimum diameter profile (D) of a section of the duct (1) along the length of said duct (1);
   - Defining (step E4) at least one sliding window for examining the duct (1) for which the minimum diameter (D) of the duct (1) at the longitudinal ends of said window is known for each position of said window on the duct (1); and
   - Calculating (step E5), for each position of the at least one window, the maximum loss of minimum diameter of the duct (1) within the window with respect to an interpolation of the diameters (D) at the longitudinal ends of the window.

2. The method according to claim 1, further comprising a step (E6) of recording the position of a window when the maximum loss of minimum diameter (D) calculated for said window is greater than a predetermined threshold, preferably 50% loss, even more preferably 70% loss.

3. The method according to claim 2, further comprising a step (E7) of evaluating, for each window for which the position is recorded and which at least partially overlaps another window for which the position is recorded, the average loss of minimum diameter (D) of the duct (1) within said window with respect to the interpolation of the diameters (D) at the longitudinal ends of the window.

4. The method according to claim 3, comprising a step (E8) of classifying, for each set of windows for which the positions are recorded and which at least partially overlap, the window for which the average loss of minimum diameter (D) evaluated is the highest in said set of windows.

5. The method according to any one of claims 1 to 4, comprising a prior step (E1) of acquiring a three-dimensional image of a duct (1) tree (3) and a step (E2) of processing the three-dimensional image by segmenting the duct (1) tree (3) into at least one three-dimensional image of a duct (1).

6. The method according to any one of claims 1 to 5, wherein the minimum diameter profile (D) is determined with a measurement step of between 0.1 mm and 1 mm, preferably between 0.2 mm and 0.5 mm, even more preferably 0.3 mm, the sliding window of examination sliding along the duct (1) with an increment equivalent to the measurement step of the minimum diameter profile (D).

7. The method according to any one of claims 1 to 6, wherein the longitudinal ends of the window are spaced apart by a distance of between 1.8 mm and 14.1 mm.

8. The method according to claim 7, wherein a plurality of windows is defined, each window comprising a distance between its longitudinal ends different from the others.

9. The method according to any one of claims 1 to 8, wherein the recording step (E6) is carried out only if the maximum loss of minimum diameter (D) of the duct (1) within the window with respect to the minimum diameter of the longitudinal end of the window having the smallest minimum diameter is greater than a predetermined threshold, preferably 40% loss.

10. The method according to any one of claims 1 to 9, implemented only for portions of a duct (1) for which the minimum diameter (D) is greater than a value between 1 mm and 3 mm, preferably between 1.5 mm and 2 mm, even more preferably a value of 1.6 mm.

11. The method according to any one of claims 1 to 10, wherein the duct (1) is a physiological duct (1) such as a blood vessel, preferably a coronary artery.

12. A system comprising means for implementing the steps of the method according to any one of claims 1 to 11.

[Fig. 1]

[Fig. 2]

[Fig. 3]

## EUROPEAN SEARCH REPORT

**Application Number**

EP 25 21 3380

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAN XU ET AL: "Quantification of stenosis in coronary artery via CTA using fuzzy distance transform", 20090101, vol. 7262, 1 January 2009 (2009-01-01), pages 72620K-1, XP002663950, DOI: 10.1117/12.811361 | 1,2,5,9, 11,12 | INV. G06T7/00 |
| Y | * abstract * | 10 | |
| A | * section 2 *<br>* figures 1,3,5 * | 3,4,6-8 | |
| Y | LIU XUQING ET AL: "Automatic Quantitative Coronary Analysis Based on Deep Learning", APPLIED SCIENCES, vol. 13, no. 5, 25 February 2023 (2023-02-25), page 2975, XP093387909, Basel ISSN: 2076-3417, DOI: 10.3390/app13052975 * abstract * * sections 2.5.3, 2.5.4 * | 10 | |
| A | US 9 974 442 B2 (TOSHIBA MEDICAL SYS CORP [JP]; TOSHIBA KK [JP]) 22 May 2018 (2018-05-22) * the whole document * | 1-12 | |

**TECHNICAL FIELDS SEARCHED (IPC)**

G06T

The present search report has been drawn up for all claims

| Place of search | Date of completion of the search | Examiner |
|---|---|---|
| Munich | 15 April 2026 | Eveno, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................
& : member of the same patent family, corresponding
    document

# EP 4 752 829 A1

## ANNEX TO THE EUROPEAN SEARCH REPORT
## ON EUROPEAN PATENT APPLICATION NO.

EP 25 21 3380

15-04-2026

| Patent document cited in search report | | Publication date | Patent family member(s) | | Publication date |
|---|---|---|---|---|---|
| US 9974442 | B2 | 22-05-2018 | CN | 104224217 A | 24-12-2014 |
| | | | JP | 6462238 B2 | 30-01-2019 |
| | | | JP | 2015006336 A | 15-01-2015 |
| | | | US | 2014378850 A1 | 25-12-2014 |

EPO FORM P0459